# EUROPÄISCHE PATENTSCHRIFT

(11) **EP 2 053 298 B1**
(45) Veröffentlichungstag und Bekanntmachung des Hinweises auf die Patenterteilung: **12.10.2011**
(21) Anmeldenummer: 08018166.2
(22) Anmeldetag: 16.10.2008
(51) Int. Cl.: F16L 47/32

(54) **Verteileranordnung**
Distributor arrangement
Agencement de distributeur

(30) Priorität: 23.10.2007 DE 102007050955
(43) Veröffentlichungstag der Anmeldung: 29.04.2009
(73) Patentinhaber: HENCO Industries NV, 2200 Herentals (BE)
(72) Erfinder: Hendrickx, Willy, 2200 Herentals (BE)
(74) Vertreter: Starke, Günter

(56) Entgegenhaltungen:
- WO-A-2004/079250

## Beschreibung

Die Erfindung betrifft eine Verteileranordnung für Flüssigkeiten und/oder Gase mit einer Hauptverteilungsleitung und zumindest einem Abzweigleitungsanschluss, der an die Hauptverteilungsleitung angeformt ist und wobei die aus einem Kunststoffwerkstoff gefertigte Hauptverteilungsleitung an ihren beiden Seiten jeweils eine endseitige Verbindungseinrichtung aufweist und die Hauptverteilungsleitung und der zumindest eine Abzweigleitungsanschluss gemeinsam aus einem Kunststoffwerkstoff gefertigt sind.

Eine derartige Verteileranordnung ist aus der DE 196 08 781 A1 bekannt. Diese Verteileranordnung weist eine aus einem Kunststoffwerkstoff gefertigte Hauptverteilungsleitung auf, an die aus einem Metallwerkstoff gefertigte Abzweigleitungsanschlüsse angespritzt sind. Endseitig weist die Hauptverteilungsleitung je ein außenliegendes Anschlussgewinde auf, wobei ein Anschlussgewinde ein Rechtsgewinde und das andere Anschlussgewinde ein Linksgewinde ist.

Eine weitere Verteileranordnung ist aus der WO 2004/07250 A1 bekannt. Diese Verteileranordnung weist eine Hauptverteilungsleitung auf, an der auf einer Seite eine Verbindungseinrichtung angeformt ist. Von dieser Verbindungseinrichtung aus ist die Hauptverteilungsleitung bis zu dem gegenüberliegenden verschlossenen Ende sich konisch verengend ausgebildet. Ein Verbinden mehrerer Verteileranordnungen entsprechend den Anforderungen an eine bestimmte Anzahl von Abzweigleitungsanschlüssen ist nicht möglich.

Der Erfindung liegt die Aufgabe zugrunde, eine Verteileranordnung bereitzustellen, die bei einfacher Fertigung eine hohe Montagesicherheit und problemlose Handhabung bietet.

Diese Aufgabe wird dadurch gelöst, dass der Kunststoffwerkstoff Polyvinylidenfluorid (P.V.D.F) ist und dass die Verbindungseinrichtungen auf einer Seite der Hauptverteilungsleitung ein Innengewindeanschluss und auf der gegenüberliegenden Seite ein Außengewindeanschluss sind. Der Werkstoff Polyvinylidenfluorid hat sich als besonders geeignet für die Herstellung einer solchen Verteileranordnung erwiesen. Der Werkstoff weist eine gute Temperaturbeständigkeit und gute Alterungsbeständigkeit auf. Weiterhin tritt keine Korrosion an den Kontaktstellen mit an der Verteileranordnung anzuschließenden Rohren oder sonstigen Komponenten auf, die beispielsweise aus einem metallischen Werkstoff gefertigt sein können, so dass eine spezielle Isolierung nicht nötig ist. Dadurch, dass die Verbindungseinrichtungen auf einer Seite der Hauptverteilungsleitung ein Innengewindeanschluss und auf der gegenüberliegenden Seite ein Außengewindeanschluss sind, können durch die entsprechende Auslegung der beiden Gewindeanschlüsse die Gewindeanschlüsse verschiedener Verbindungseinrichtungen direkt miteinander verschraubt werden. Im Ergebnis ist eine Verteileranordnung bereitgestellt, die eine hohe Montagesicherheit bietet und dabei problemlos zu handhaben ist.

In Weiterbildung der Erfindung sind zwei Abzweigleitungsanschlüsse an die Hauptverteilungsleitung angeformt. Alternativ sind drei Abzweigleitungsanschlüsse an die Hauptverteilungsleitung angeformt. Durch Kombination solcher Verteileranordnungen kann eine beliebige Anzahl von Abzweigleitungsanschlüssen bereitgestellt werden. Hierbei ist zu berücksichtigen, dass gegebenenfalls eine der beiden endseitigen Verbindungseinrichtungen ebenfalls als Abzweigleitungsanschluss benutzt werden kann.

In Weiterbildung der Erfindung ist das Gewinde des Innengewindanschlusses und des Außengewindeanschlusses jeweils ein Trapezgewinde. Diese Gewindeformen haben sich als besonders geeignet erwiesen. Weiterhin weisen der lnnengewindanschluss und der Außengewindeanschluss jeweils zumindest einen rastbaren Endanschlag auf. Werden zwei Verbindungseinrichtungen miteinander verschraubt, so rasten die Endanschläge der beiden Verbindungseinrichtungen bei einer vollständig durchgeführten Verschraubung ineinander ein. Dabei sind die Gewindeanschlüsse und die Endanschläge so ausgebildet beziehungsweise ausgerichtet, dass die Abzweigleitungsanschlüsse von zwei oder mehr miteinander verschraubten Verbindungseinrichtungen genau in eine Ebene ausgerichtet sind. Dadurch ist im Baustellenbereich eine hohe Montagesicherheit gewährleistet.

In weiterer Ausgestaltung ist mit dem Innengewindanschluss und/oder dem Außengewindeanschluss eine weitere Hauptverteilungsleitung oder ein Schraubfitting oder ein Verschlussstopfen verschraubbar. Durch entsprechende Kombination dieser Komponenten lassen sich beliebige Verteileranordnungen zusammenstellen, ohne dass spezielle nur für einen ganz bestimmten Einsatzzweck gefertigte Teile benötigt werden. Wird beispielsweise bei einer Etagenverteilung eine Verteileranordnung mit insgesamt fünf Abzweigleitungsanschlüssen benötigt, so werden Hauptverteilungsleitungen mit zwei Abzweigleitungsanschlüssen und drei Abzweigleitungsanschlüssen miteinander verschraubt und auf ein Gewindeanschlussstück ein Schraubfitting für die Wasserzufuhr und auf das gegenüberliegende Gewindeanschlussstück ein Verschlussstopfen aufgeschraubt. Soll die Etagenverteilung noch beispielsweise zu einer weiteren Wohnung weitergeführt werden, so wird anstelle des Verschlussstopfens ein weiterer Schraubfitting aufgeschraubt und das Wasser über eine entsprechende Leitung weitergeführt.

In Weiterbildung der Erfindung ist der Abzweigleitungsanschluss als Steckfittinganschluss mit einem Steckteil ausgebildet ist. Dabei weist in weiterer Ausgestaltung der Steckfittinganschluss einen mit der Hauptverteilungsleitung gefertigten Grundkörper auf. Auf diesen Grundkörper werden dann in wiederum weiterer Ausgestaltung die weiteren den vollständigen Steckteil bildenden Komponenten, insbesondere eine Hülse, ein Spannring, ein Klemmring und eine Kegelringhülse sowie Dichtringe montiert. Die Schraubfittinge sind entsprechend ebenfalls mit einem Steckteil und aus so weit wie möglich den gleichen Komponenten aufgebaut. Der besondere Vorteil ist die einfache Montage auf der Baustelle, da die bevorzugt als Verbundrohre (Kunststoff-Metall-Kunststoff) ausgebildeten Rohre nur in solche Steckfittinge eingeschoben werden müssen.

In einer alternativen Ausgestaltung ist der Abzweigleitungsanschluss mit einem ein Schraubgewinde aufweisenden Anschlussstutzen ausgebildet. Dabei ist dann der Anschlussstutzen als Eurokonusanschluss oder alls Flachdichtungsanschluss ausgebildet. An diese Anschlussstutzen sind entsprechend ausgebildete Fittinge, die bevorzugt wiederum Steckfittinge mit den zuvor aufgeführten Komponenten sind, angeschraubt. Alternativ können die Fittinge aber auch Pressfittinge sein.

Weiterhin sind die Einsteckbereiche der Steckteile mit einem Gummistopfen oder einer Schutzkappe verschließbar. Dabei ist die Schutzkappe mit einer Halteklammer an dem Spannring festlegbar. Die Halteklammer ist von Hand oder mit Hilfe eines Werkzeugs, beispielsweise eines Schraubendrehers, problemlos entfernbar, so dass somit kein erhöhter Montageaufwand entsteht. Andererseits ist durch die Halteklammer sichergestellt, dass in jedem Falle ein unbeabsichtigtes Lösen der Schutzkappe von dem Steckfitting vermieden wird. Die Schutzkappe weist zwei gegenüberliegende parallel zueinander verlaufende Längsausnehmungen auf. Weiterhin weist die u-förmig ausgebildete Halteklammer zwei gegenüberliegende Arme auf, die in die Längsausnehmungen einschiebbar sind und deren Arme im eingeschobenen Zustand gleichzeitig in eine ringförmige Außenringnut des Klemmrings eingreifen. Durch diese Ausgestaltung ist eine besonders zuverlässige, aber gleichzeitig auch handhabungsfreundliche Sicherung der Schutzkappe gewährleistet. Da an die Schutzkappe keine besonderen Anforderungen beispielweise zur Dauerhaltbarkeit gestellt sind, kann diese aus einem einfachen preiswerten Kunststoffmaterial hergestellt sein. Gleiches gilt für die Halteklammer, die aber auch aus einem vorzugsweise nicht rostenden Metall hergestellt sein kann. Natürlich ist es aber auch denkbar, beide Bauteile aus dem gleichen Kunststoff, nämlich insbesondere Polyvinylidenfluorid, aus dem die weiteren Komponenten der Verteileranordnungen bestehen, herzustellen.

Weitere vorteilhafte Ausgestaltungen der Erfindung sind der Zeichnungsbeschreibung zu entnehmen, in der in den Figuren dargestellte Ausführungsbeispiele näher beschrieben sind.

Es zeigen:
- Fig. 1: eine Verteileranordnung mit zwei Abzweigleitungsanschlüs- sen,
- Fig. 2a, 2b: Schraubfittinge in verschiedenen Größen,
- Fig. 3: eine Verteileranordnung mit drei Abzweigleitungsanschlüssen,
- Fig. 4:: einen Verschlussstopfen,
- Fig. 5: einen weiteren Schraubfitting,
- Fig. 6: eine weitere Verteileranordnung mit drei Abzweigleitungsan- schlüssen,
- Fig. 7:: eine weitere Verteileranordnung mit zwei Abzweigleitungsan- schlüssen,
- Fig. 8: einen Steckfitting mit einem Eurokonus,
- Fig._9: einen Pressfitting mit einem Eurokonus,
- Fig. 10:: einen Steckfitting mit einem Flachdichtungsanschluß,
- Fig. 11: den Steckteil eines Abzweigleitungsanschlusses und
- Fig. 12: eine Halteklammer zum Festlegen einer Schutzkappe.

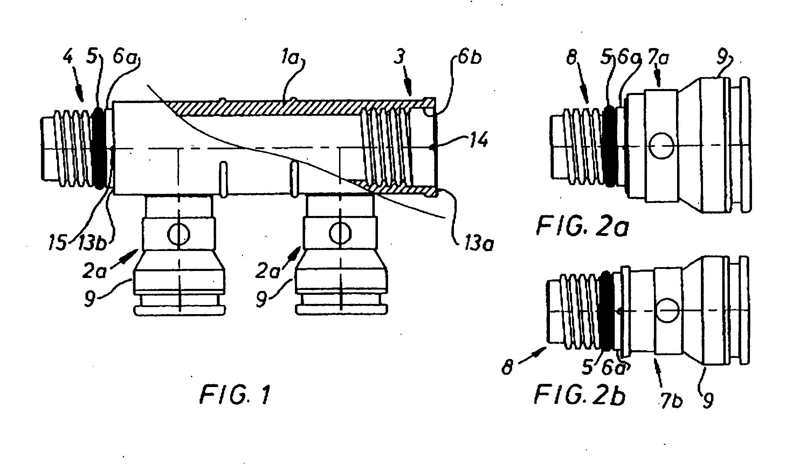

Die in Fig. 1 dargestellte Verteileranordnung wird insbesondere im Sanitärinstallationsbereich und im Heizungsbau verwendet, kann aber grundsätzlich für die Verteilung beliebiger Flüssigkeiten und Gase verwendet werden. Insbesondere können an einer derartigen Verteileranordnung Wasserleitungen oder Heizungsleitungen beispielsweise bei einer Etagenverteilung angeschlossen werden. Die erfindungsgemäße Verteileranordnung und die später erläuterten Anschlusskomponenten können dabei in allen handelsüblichen Größen, insbesondere Durchmessern, und Ausführungen gefertigt werden.

In dem Ausführungsbeispiel gemäß Figur 1 ist eine Verteileranordnung gezeigt, bei der zwei Abzweigleitungsanschlosse 2a an eine Hauptverteilungsleitung 1a angeformt sind. Die Hauptverteilungsleitung 1a weist endseitige Verbindungseinrichtungen auf, wobei die Verbindungseinrichtung auf der rechten Seite mit einem Innengewindeanschluss 3 und die Verbindungseinrichtung auf der linken Seite mit einen Außengewindeanschluss 4 ausgebildet ist. Das Gewinde ist jeweils als Trapezgewinde ausgebildet und ist bei einer (Größen)-Baureihe von Verbindungseinrichtungen von einheitlicher Größe. Es können also beliebig viele Verbindungseinrichtungen einer Baureihe zusammengeschraubt werden. Zwischen dem Außengewindeanschluss 4 und der Hauptverteilungsleitung 1 a ist in einen Zylinderabschnitt 6a eine umlaufende Ringnut eingelassen, wobei in die Ringnut ein Runddichtring 5 eingesetzt ist. Der Außendurchmesser des Runddichtrings 5 ist geringfügig größer als der des Gewindes des Außengewindeanschlusses 4. Auf der gegenüberliegenden Seite ist zwischen der Hauptverteilungsleitung 1a und dem Innengewindeanschluss 3 in die Verteileranordnung ein entsprechender Zylinderabschnitt 6b eingelassen, dessen Durchmesser geringfügig kleiner als der Außendurchmesser des Runddichtrings 5 ist. Werden beispielsweise zwei Verteileranordnungen zusammengeschraubt, wird durch einen in den Zylinderabschnitt 6b eingeführten Runddichtring 5 eine dichte Verbindung der Bauteile hergestellt.

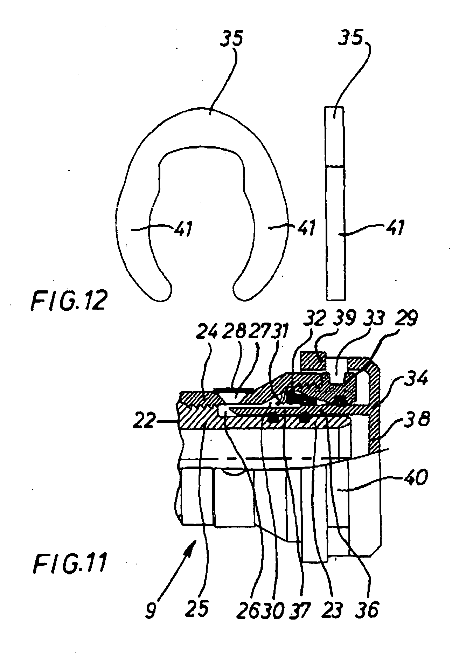

In den Figuren 2a, 2b sind Schraubfittinge 7a, 7b mit einem Außengewindeteil 8 dargestellt, das jeweils in den Innengewindeanschluss 3 eingeschraubt werden kann. Die Schraubfittinge 7a, 7b weisen jeweils an den Außengewindeteil 8 anschließende Steckteile 9 auf, die unterschiedliche Durchmesser aufweisen. Das heißt, es können mit diesen Steckteilen 9 Rohre unterschiedlichen Durchmessers verbunden werden. Der Aufbau des Steckteils 9 wird später (Fig. 11) erläutert. Der in den Innengewindeanschluss 3 einzuschraubende Außengewindeteil 8 weist den gleichen Aufbau wie der zuvor beschriebene Außengewindeanschluss 4 der Verteileranordnung gemäß Fig. 1 auf.

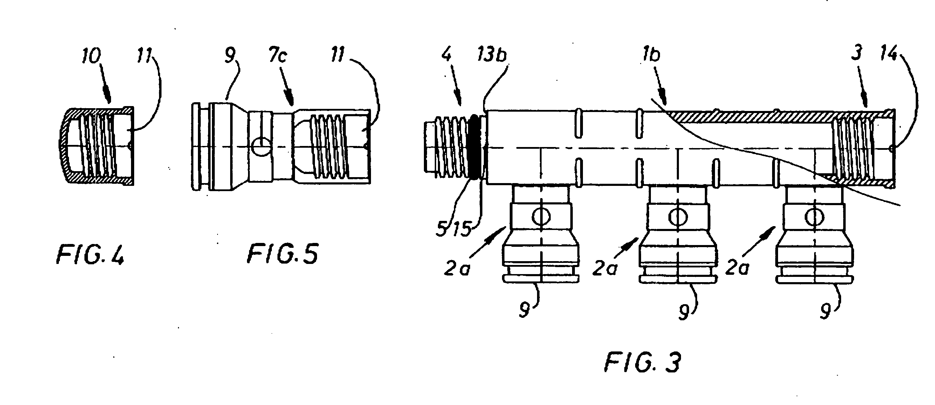

In der Figur 4 ist ein Verschlussstopfen 10 dargestellt, der mit einem Innengewindeteil 11 auf den Außengewindeanschluss 4 der Verteileranordnung aufgeschraubt werden kann. Alternativ kann gemäß der Figur 5 ein, weiterer Schraubfitting 7c auf den Außengewindeanschluss 4 der Verteileranordnung aufgeschraubt werden. Dieser weitere Schraubfitting 7c weist ebenfalls ein Innengewindeteil 19 auf, an dem sich wiederum ein Steckteil 9 anschließt. Dieses Steckteil 9 kann ebenfalls in verschiedenen Größen ausgebildet sein.

Zurückkommend auf die Verteileranordnung gemäß Figur 1 weisen die Abzweigleitungsanschlüsse 2a ebenfalls Steckteile 9 auf. Dabei ist der später erläuterte Grundkörper 22 dieser Steckteile 9 einstückig mit der Hauptverteilungsleitung 1a ausgebildet und aus dem Kunststoffwerkstoff Polyvinylidenfluorid hergestellt.

Im Figur 3 ist eine Verteileranordnung dargestellt, bei der von der Hauptverteilungsleitung 1b drei Abzweigleitungsanschlüsse 2a abgehen. Durch Kombination der beiden Verteileranordnungen mit zwei oder drei Abzweiganschlüssen 2a und gegebenenfalls einem. Schraubfitting 7c gemäß Figur 5 können somit Verteileranordnungen mit einer beliebigen Anzahl von Abzweigleitungsanschlüssen 2a bereitgestellt werden.

In die Stirnseite 13a des Innengewindeanschlusses 3 ist ein rastbarer Endanschlag in Form von zwei Rastnuten 14 eingelassen. Auf der gegenüberliegenden inneren Stirnseite 13b des Außengewindeanschlusses 4 ist ein rastbarer Endanschlag in Form zweier vorstehender Nasen 15 angeordnet. Werden zwei Verteileranordnungen miteinander verschraubt, rasten die Nasen 15 in die Rastnuten 14 ein und fixieren die beiden Verteileranordnungen so zueinander, dass die Abzweigleitungsanschlüsse 2a genau in einer Ebene liegen. Entsprechende Nasen 15 sind auch in die Schraubfittinge 7a, 7b eingearbeitet, während an dem Verschlussstopfen 10 und dernSchraubfitting 7c entsprechende Rastnuten 14 angeformt sind.

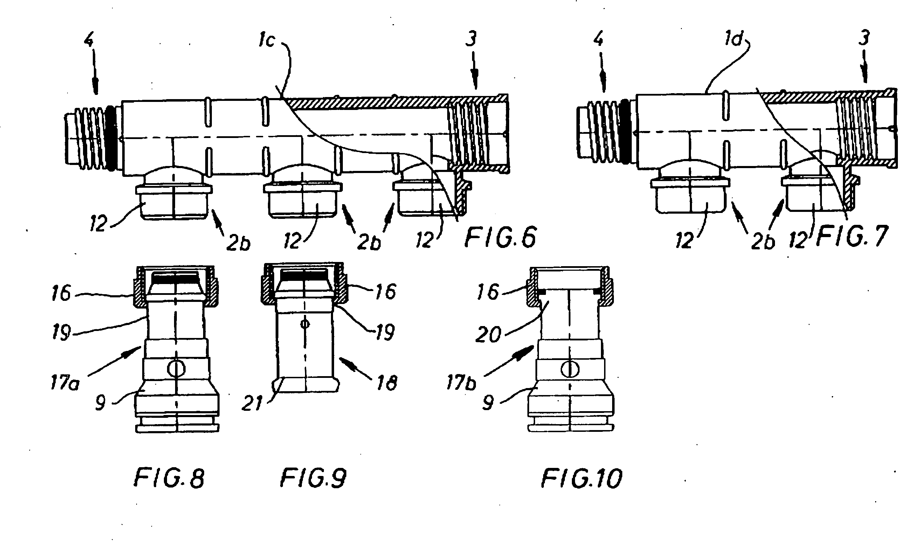

Die Verteileranordnung gemäß den Figuren 6 und 7 unterscheidet sich von denen der Figuren 1 und 3 dadurch, dass die Abzweigleitungsanschlüsse 2b jeweils ein Schraubgewinde 12 aufweisende Anschlussstutzen sind. Diese Anschlussstutzen sind entweder als Eurokonusanschluss (wie dargestellt) oder als Flachdichtungsanschluss ausgebildet. An diesen wird mittels einer Überwurfmutter 16 entweder ein Steckfitting 17a, 17b gemäß den Figuren 8 und 10 oder ein Pressfitting 18 gemäß Figur 9 befestigt. Bei diesen Ausführungen ist es folglich möglich, das Rohr mitsamt dem Steckfitting 17a, 17b oder dem Pressfitting 18 durch Lösen/Festdrehen der Überwurfmutter 16 von der Hauptverteilungsleitung 1c, 1d zu lösen beziehungsweise zu befestigen. Der Steckfitting 17a, 17b weist wieder ein Steckteil 9 und daran anschließend ein mit dem Anschlussstutzen korrespondierendes Eurokonusteil 19 oder ein Flachdichtungsteil 20 auf. Entsprechend ist der Pressfitting 18 aufgebaut, wobei dessen Pressteil eine Presshülse 21 aufweist, mit der ein eingeschobenes Rohr, insbesondere ein Kunststoff-Metall-(Aluminium)-Kunststoff-Verbundrohr, auf einem den Fortsatz des Eurokonusteils 19 (oder des Flachdichtungsteils 20) bildenden inneren Rohrträger festgelegt ist.

In der Figur 11 ist von dem zuvor erläuterten Steckteil 9 im Wesentlichen nur der Einsteckbereich dargestellt. Dieser Steckteil 9 weist einen Grundkörper 22 auf der entweder gemäß der Ausgestaltung nach den Figuren 1 und 3 einstückig mit der Hauptverteilungsleitung 1 a, 1b aus Polyvinylidenfluorid (P.V.D.F) gefertigt ist oder aber gemäß den Figuren 8 und 10 zusammen mit dem Eurokonusteil 19 oder Flachdichtungsteil 20 ebenfalls aus Polyvinylidenfluorid (P.V.D.F) gefertigt ist. Das gleiche gilt sinngemäß für die Schraubfittinge 7a, 7b, 7c. Weiterhin sind die weiteren Komponenten des Steckteils 9 - sofern diese nicht aus einem metallischen Werkstoff gefertigt sind - bevorzugt ebenfalls aus Polyvinylidenfluorid (P.V.D.F) gefertigt.

Auf den Grundkörper 22 ist eine Hülse 24 aufgesetzt und im Bereich eines Mittelteils 25 mit dem Grundkörper 22 verschraubt. Diese Verbindung ist lösbar, um beispielsweise einen defekten später genannten Runddichtring austauschen zu können.

Die Hülse 24 bildet zusammen mit dem inneren Rohrträger 23 einen Ringraum 26 zur Aufnahme des Rohrs oder einem damit korrespondierenden Rohrabschnitt des weiteren Steckfittings. Der Vorgang des Einschiebens ist durch eine Kontrollöffnung 27 kontrollierbar, dass heißt, wenn das Rohr an dem Bund anliegt, ist das Rohr durch die daneben liegende Kontrollöffnung 27 sichtbar. Mehrere auf dem Umfang der Hülse 24 verteilt angeordnete Kohtrollöffnungen 27 sind durch einen durchsichtigen Schutzring 28, der mit der Hülse 24 dicht verbunden ist, abgedeckt. Endseitig ist in die Hülse 24 ein Spannring 29 eingeschraubt. Der Spannring 29 und die Hülse 24 bildeten eine trapezförmige Ausnehmung 30. In diese trapezförmige Ausnehmung 30 ist ein Klemmring 31 zusammen mit einer Stützscheibe sowie eine Kegelringhülse 32 eingesetzt. Der Spannring 29 weist stirnseitig bevorzugt drei Ausnehmungen auf, in die ein Werkzeug einsetzbar ist. Mit diesem Werkzeug kann der Spannring 29 in die Hülse 24 eingeschraubt werden und auch wieder heraus geschraubt werden. Somit ist es möglich, das Rohr zerstörungsfrei von dem Steckteil 9 zu lösen.

Im übrigen kann in dem Teil der Ausnehmung 30, der in der Hülse 24 liegt, eine Anlageschulter für eine exakte Positionierung des Klemmrings 31 angebracht sein. Der in dem Spannring 29 befindliche Bereich der Ausnehmung 30 weist eine Oberflächenkontur auf, die je eine ringförmige Anlagefläche mit der Kegelringhülse 32 im Bereich von deren Endbereichen herstellt. Die Kegefringhülse 32 weist in dem zu dem Spannring 29 weisenden Bereich eine Verzahnung auf. Weiterhin weist die Kegelringhülse 32 auf der mit dem Rohr zusammenwirkenden Seite Zähne auf. Schließlich weist die Kegelringhülse 32 einen die Kegelringhülse 32 auftrennenden Spalt und/oder biegeelastische Bereiche auf. Die Kegelringhülse 32 ist in weiterer Ausgestaltung aus Metall, beispielsweise Messing gefertigt. Insbesondere bei dieser Fertigung weist die Kegelringhülse den erwähnten Spalt und vorzugsweise drei auf dem Umfang der Kegelringhülse 32 verteilte biegeelastische Bereiche auf. Dadurch wird die Bewegung des Eingreifens in das Rohr erleichtert. Die Kegelringhülse 32 kann aber auch aus Kunststoff gefertigt sein. In diesem Fall weist sie nur einen Spalt auf, da Kunststoff genügend biegeelastisch ist, um die nötige Verformung beim Eingreifen in das Rohr zu ermöglichen.

Im übrigen ist der vorzugsweise aus einem metallischen Werkstoff gefertigte Klemmring 31 scheibenförmig mit nach innen weisenden Haltezähnen ausgebildet. Diese Ausbildung ermöglicht eine unkomplizierte Herstellung durch beispielsweise Ausstanzen aus einer Metallplatte. Die Haltezähne können auf der später mit dem Rohr zusammenwirkenden Seite gebogen oder gerade ausgebildet sein. Sind sie gebogen ausgebildet, kann die Bogenform der Kontur des Rohrs folgen oder entgegengesetzt ausgerichtet sein. Bevorzugt sind die Haltezähne gegenüber dem scheibenförmigen Teil des Klemmrings 31 abgewinkelt. Der Winkel beträgt dabei zwischen 10 Grad bis 80 Grad, vorzugsweise 30 Grad bis 50 Grad. Montiert wird der so ausgebildete Klemmring 31 in der Form, dass die abgewinkelten Haltezähne zu dem Mittelteil 25 des Steckteils 9 weisen. Ein Einschieben des Rohrs ist unter gegebenenfalls einer geringfügigen weiteren Aufbiegung des Haltezähne problemlos möglich, während bei einer Zugbelastung des Rohrs die Haltezähne in die äußere Schicht des Rohrs eingreifen. Damit die Haltezähne auch bei einer hohen von dem Verbundrohr ausgeübten Zugkraft nicht in Richtung zu dem Spannring 29 umknicken können, ist eine Stützscheibe vorgesehen, die zusätzlich montierbar ist. Die Stützscheibe weist die gleiche Abwinklung wie der Klemmring 31 auf. Dabei erstreckt sich die Stützscheibe über die Abwinklung des Klemmrings 31 hinaus bis etwa beispielsweise zu der halben Länge der Haltezähne. Der Klemmring 31 sowie gegebenenfalls die Stützscheibe können auch einstückig aus einem metallischen Werkstoff, wie beispielsweise Edelstahl, Kupfer, Messing oder Aluminium gefertigt sein. Diese Werkstoffe sind einerseits korrosionsbeständig und weisen andererseits eine hohe Festigkeit auf.

Gegenüberliegend zu der trapezförmigen Ausnehmung 30 weist der innere Rohrträger 2 zwei Ringnuten zum Einlegen von Runddichtringen auf. In dem Spannring 29 ist ebenfalls eine Ringnut eingearbeitet, in die ein weiterer Runddichtring eingesetzt ist. Auf dem äußeren Umfang weist der Spannring 29 eine Außenringnut 33 auf, die zum Befestigen einer Schutzkappe 34 dient.

Der Einsteckbereich des Ringraums 26 ist vor der Montage zum Schutz gegen Eindringen von Schmutz von einer Schutzkappe 34 verschlossen, wobei die Schutzkappe 34 mit einer in Fig. 12 dargestellten Halteklammer 35 an dem Spannring 29 - wie später erläutert wird - befestigt wird. Die Schutzkappe 34 weist ein Rohrteil 36 auf, das in den Ringraum 26 eingeschoben ist. Damit die Zähne des Klemmrings 31 nicht in das Rohrteil 36 eingreifen, weist das Rohrteil 36 einen im Durchmesser verringerten Abschnitt 37 auf, der etwa von der Mitte der Kegelringhülse 32 bis zu dem Mittelteil, 25 weisenden Ende des Rohrteils 36 reicht. Auf der gegenüberliegenden Seite weist die Schutzkappe 34 einen Deckelbereich 38 auf, an den ein äußerer, den Spannring 29 und einen Teil der Hülse 24 umfassenden, topfförmiger Bereich 39 anschließt. Der topfförmige Bereich 39 weist zwei gegenüberliegende Längsausnehmungen 40 auf, die zu der Außenringnut 33 ausgerichtet sind. Durch diese Längsausnehmungen 40 greifen im montierten Zustand zwei Arme 41 der Halteklammer 35 hindurch in die Außenringnut 33 ein und sorgen für eine sichere Befestigung der Schutzkappe 34 an dem Steckteil. Alternativ kann anstelle der Schutzkappe 34 auch ein Gummistopfen zur Anwendung kommen, der in den inneren Rohrträger 23 hineingesteckt wird und den Einsteckbereich des Ringraums 26 abdeckt. Zur leichten Montage und Demontage weist der Gummistopfen eine Fahne auf, mit der er leicht aus dem Rohrträger herausziehbar ist.

### Bezugzeichenliste:

- 1a, 1b, 1c, 1d: Hauptverteilungsleitung
- 2a, 2b: Abzweigleitungsanschluss
- 3: Innengewindeanschluss
- 4: Außengewindeanschluss
- 5: Runddichtring
- 6a, 6b: Zylinderabschnitt
- 7a, 7b, 7c: Schraubfitting
- 8: Gewindeteil
- 9: Steckteil
- 10: Verschlussstopfen
- 11: Innengewindeteil
- 12: Schraubgewinde
- 13a, 13b: Stirnseite
- 14: Rastnut
- 15-: Nase
- 16: Überwurfmutter
- 17a, 17b: Steckfitting
- 18: Pressfitting
- 19: Eurokonusteil
- 20: Flachdichtungsteil
- 21: Presshülse
- 22: Grundkörper
- 23: Rohrträger
- 24: Hülse
- 25: Mittelteil
- 26: Ringraum
- 27: Kontrollöffnung
- 28: Schutzring
- 29: Spannring
- 30: Ausnehmung
- 31: Klemmring, Stützscheibe
- 32: Kegelringhülse
- 33: Außenringnut
- 34: Schutzkappe
- 35: Halteklammer
- 36: Rohrteil
- 37: Abschnitt
- 38: Deckelbereich
- 39: Bereich
- 40: Längsausnehmung
- 41: Arm

## Patentansprüche

1. Verteileranordnung (1a, 1b, 1c, 1d) für Flüssigkeiten und/oder Gase mit einer Hauptverteilungsleitung und zumindest einem Abzweigleitungsanschluss (2a, 2b), der an die Hauptverteilungsleitung (1a, 1b, 1c, 1d) angeformt ist und wobei die aus einem Kunststoffwerkstoff gefertigten Hauptverteilurigsleitung (1a, 1b, 1c, 1d) endseitige Verbindungseinrichtung (3, 4) aufweist,
und die Hauptverteilungsleitung (1a, 1b, 1c, 1d) und der zumindest eine Abzweigleitungsanschluss (2a, 2b) gemeinsam aus einem Kunststoffwerkstof gefertigt sind,
**dadurch gekennzeichnet, dass** der Kunststoffwerkstoff Polyvinylidenfluorid (P.V.D.F) ist und dass die Verbindungseinrichtungen (3, 4) auf einer Seite der Hauptverteilungsleitung (1a, 1b, 1c, 1d) ein Innengewindeanschluss (3) und auf der gegenüberliegenden Seite ein Außengewindeanschluss (4) sind.

2. Verteileranordnung nach Anspruch 1,
**dadurch gekennzeichnet, dass** zwei Abzweigleitungsanschlüsse (2a, 2b) an die Hauptverteilungsleitung (1a, 1 b, 1 c, 1 d) angeformt sind.

3. Verteileranordnung nach Anspruch 1,
**dadurch gekennzeichnet, dass** drei Abzweigleitungsanschlüsse (2a, 2b) an die Hauptverteilungsleitung (1a, 1b, 1c, 1d) angeformt sind.

4. Verteileranordnung nach einem der vorherigen Ansprüche,
**dadurch gekennzeichnet, dass** das Gewinde des Innengewindanschlusses (3) und des Außengewindeanschlusses (4) jeweils ein Trapezgewinde ist.

5. Verteileranordnung nach einem der vorherigen Ansprüche,
**dadurch gekennzeichnet, dass** der Innengewindanschluss (3) und der Außengewindeanschluss (4) jeweils zumindest einen rastbaren Endanschlag aufweisen.

6. Verteüeranordnung nach einem der vorherigen Ansprüche,
**dadurch gekennzeichnet, dass** mit dem Innengewindanschluss (3) und/oder dem Außengewindeanschluss (4) eine weitere Hauptverteilungsleitung (1a, 1b, 1c, 1d) oder ein Schraubfitting (7a, 7b, 7c) oder ein Verschlussstopfen (10) verschraubbar ist.

7. Verteileranordnung nach einem der vorherigen Ansprüche,
**dadurch gekennzeichnet, dass** der Abzweigleitungsanschluss (2a) als Steckfittinganschluss mit einem Steckteil (9) ausgebildet ist.

8. Verteileranordnung nach Anspruch 7,
**dadurch gekennzeichnet, dass** der Steckfittinganschluss einen mit der Hauptverteilungsleitung (1a, 1b, 1c, 1d) gefertigten Grundkörper (22) aufweist.

9. Verteileranordnung nach Anspruch 8,
**dadurch gekennzeichnet, dass** zumindest eine Hülse (24), ein Spannring (29), ein Klemmring (31) und eine Kegelringhülse (32) den Steckteil (9) bilden.

10. Verteileranordnung nach einem der Ansprüche 1 bis 6,
**dadurch gekennzeichnet, dass** der Abzweigleitungsanschluss (2b) mit einem ein Schraubgewinde aufweisenden Anschlussstutzen ausgebildet ist.

11. Verteileranordnung nach Anspruch 10,
**dadurch gekennzeichnet, dass** der Anschlussstutzen als Eurokonusanschluss ausgebildet ist.

12. Verteileranordnung nach Anspruch 10,
**dadurch gekennzeichnet, dass** der Anschlussstutzen als Flachdichtungsanschluss ausgebildet ist.

## Claims

1. Distributor arrangement (1a, 1b, 1c, 1d) for liquids and/or gases, with a main distribution line and with at least one branch line connection (2a, 2b) which is integrally formed onto the main distribution line (1a, 1b, 1c, 1d), the main distribution line (1a, 1b, 1c, 1d) manufactured from a plastics material having end-face connecting devices (3, 4), and the main distribution line (1a, 1b, 1c, 1d) and the at least one branch line connection (2a, 2b) being manufactured jointly from a plastics material, **characterized in that** the plastics material is polyvinylidene fluoride (P.V.D.F), and **in that** the connecting devices (3, 4) are, on one side of the main distribution line (1a, 1b, 1c, 1d), an internally threaded connection (3) and, on the opposite side, an externally threaded connection (4).

2. Distributor arrangement according to Claim 1, **characterized in that** two branch line connections (2a, 2b) are integrally formed onto the main distribution line (1a, 1b, 1c, 1d).

3. Distributor arrangement according to Claim 1, **characterized in that** three branch line connections (2a, 2b) are integrally formed onto the main distribution line (1a, 1b, 1c, 1d).

4. Distributor arrangement according to one of the preceding claims, **characterized in that** the thread of the internally threaded connection (3) and of the externally threaded connection (4) is in each case a trapezoidal thread.

5. Distributor arrangement according to one of the preceding claims, **characterized in that** the internally threaded connection (3) and the externally threaded connection (4) have in each case at least one latchable limit stop.

6. Distributor arrangement according to one of the preceding claims, **characterized in that** a further main distribution line (1a, 1b, 1c, 1d) or a screw fitting (7a, 7b, 7c) or a screw plug (10) can be screwed to the internally threaded connection (3) and/or to the externally threaded connection (4).

7. Distributor arrangement according to one of the preceding claims, **characterized in that** the branch line connection (2a) is designed as a plug fitting connection with a plug part (9).

8. Distributor arrangement according to Claim 7, **characterized in that** the plug fitting connection has a basic body (22) manufactured together with the main distribution line (1a, 1b, 1c, 1d).

9. Distributor arrangement according to Claim 8, **characterized in that** at least one sleeve (24), one tension ring (29), one clamping ring (31) and one annular taper sleeve (32) form the plug part (9).

10. Distributor arrangement according to one of Claims 1 to 6, **characterized in that** the branch line connection (2b) is designed with a connection piece having a screw thread.

11. Distributor arrangement according to Claim 10, **characterized in that** the connection piece is designed as a Euro cone connection.

12. Distributor arrangement according to Claim 10, **characterized in that** the connection piece is designed as a flat seal connection.

## Revendications

1. Agencement de distributeur (1a, 1b, 1c, 1d) pour liquides et/ou gaz, comprenant une conduite de distribution principale et au moins un raccord de conduite de dérivation (2a, 2b), qui est formé sur la conduite de distribution principale (1a, 1b, 1c, 1d), et dans lequel la conduite de distribution principale (1a, 1b, 1c, 1d) fabriquée en un matériau plastique présente, du côté de son extrémité, un dispositif de connexion (3, 4) et la conduite de distribution principale (1a, 1b, 1c, 1d) et l'au moins un raccord de conduite de dérivation (2a, 2b) sont fabriqués ensemble en un matériau plastique,
**caractérisé en ce que** le matériau plastique est du fluorure de polyvinylidène (P.V.D.F) et **en ce que** les dispositifs de connexion (3, 4) sont, d'un côté de la conduite de distribution principale (1a, 1b, 1c, 1d) un raccord à filetage intérieur (3), et du côté opposé, un raccord à filetage extérieur (4).

2. Agencement de distributeur selon la revendication 1,
**caractérisé en ce que** deux raccords de conduite de dérivation (2a, 2b) sont formés sur la conduite de distribution principale (1a, 1b, 1c, 1d).

3. Agencement de distributeur selon la revendication 1,
**caractérisé en ce que** trois raccords de conduite de dérivation (2a, 2b) sont formés sur la conduite de distribution principale (1a, 1b, 1c, 1d).

4. Agencement de distributeur selon l'une quelconque des revendications précédentes,
**caractérisé en ce que** le filetage du raccord à filetage intérieur (3) et du raccord à filetage extérieur (4) est dans chaque cas un filetage trapézoïdal.

5. Agencement de distributeur selon l'une quelconque des revendications précédentes,
**caractérisé en ce que** le raccord à filetage intérieur (3) et le raccord à filetage extérieur (4) présentent à chaque fois au moins une butée de fin de course encliquetable.

6. Agencement de distributeur selon l'une quelconque des revendications précédentes,
**caractérisé en ce qu'**une autre conduite de distribution principale (1a, 1b, 1c, 1d) ou un raccord vissé (7a, 7b, 7c) ou un bouchon de fermeture (10) peut être vissé(e) avec le raccord à filetage intérieur (3) et/ou le raccord à filetage extérieur (4).

7. Agencement de distributeur selon l'une quelconque des revendications précédentes,
**caractérisé en ce que** le raccord de conduite de dérivation (2a) est réalisé sous forme de raccord a ajustement par enfichage avec une pièce formant fiche (9).

8. Agencement de distributeur selon la revendication 7,
**caractérisé en ce que** le raccord à ajustement par enfichage présente un corps de base (22) fabriqué avec la conduite de distribution principale (1a, 1b, 1c, 1d).

9. Agencement de distributeur selon la revendication 8,
**caractérisé en ce qu'**au moins une douille (24), un collier de serrage (29), une bague de serrage (31) et une douille à bague conique (32) constituent la pièce formant fiche (9).

10. Agencement de distributeur selon l'une quelconque des revendications 1 à 6,
**caractérisé en ce que** le raccord de conduite de dérivation (2b) est réalisé avec une tubulure de raccordement présentant un filetage.

11. Agencement de distributeur selon la revendication 10,
**caractérisé en ce que** la tubulure de raccordement est réalisée sous forme de raccord Eurokonus.

12. Agencement de distributeur selon la revendication 10,
**caractérisé en ce que** la tubulure de raccordement est réalisée sous forme de raccord d'étanchéité plat.
